# EUROPEAN PATENT APPLICATION

(11) **EP 4 851 793 A1**
(43) Date of publication of application: **09.12.2026**
(21) Application number: 24921562.5
(22) Date of filing: 28.10.2024
(51) Int. Cl.: G06F 9/451

(54) **OBJECT PROCESSING METHOD AND APPARATUS, AND DEVICE AND STORAGE MEDIUM**

(30) Priority: 31.01.2024 CN 202410138895
(71) Applicant: Beijing Youzhuju Network Technology Co., Ltd., Beijing 101299 (CN)
(72) Inventor: LIU, Mengmeng, Beijing 100028 (CN); WANG, Li, Beijing 100028 (CN)
(74) Representative: Grünecker Patent- und Rechtsanwälte PartG mbB
(86) International application number: PCT/CN2024/127927
(87) International publication number: WO 2025/161538

(57) **Abstract**

The disclosure provides a method, an apparatus, a device and a storage medium for object processing. The method includes: displaying an object page on a first page, where the object page is configured to present at least one object in a recommended object set, a target object is an object in a target status in the recommended object set; determining, in accordance with that a target information update message for the target object is detected, whether the target object is currently displayed on the object page; and displaying a target interaction control on the object page in accordance with a determination that the target object is currently not displayed on the object page, where the target interaction control is configured to trigger display of the target object on the object page. In embodiments of the present disclosure, the display of the target interaction control is triggered through the target information update message of the target object, so that the user can conveniently trigger the display of the target object through the target interaction control, and check update information of the target object in time. Thereby, interaction complexity is simplified, and user experience is improved.

## Description

This application claims priority to Chinese Patent Application No. 202410138895.9, entitled "OBJECT PROCESSING METHOD, APPARATUS, DEVICE AND STORAGE MEDIUM" filed on Jan. 31, 2024, the disclosure of which is incorporated herein by reference in its entirety.

### FIELD

The present disclosure relates to the field of data processing, and in particular, to a method, an apparatus, a device, and a storage medium for object processing.

### BACKGROUND

With the continuous development of network technologies, users have increasingly diversified requirements for interactive functions related to objects presented on a page.

Therefore, how to enrich interactive functions related to objects on the page to meet the increasingly diversified requirements of the users has become a technical problem to be solved urgently.

### SUMMARY

Embodiments of the disclosure provide a method, an apparatus, a device and a storage medium for object processing.

In a first aspect, the present disclosure provides an object processing method. The method includes: displaying an object page on a first page, wherein the object page is configured to present at least one object in a recommended object set, and the target object is an object in a target status in the recommended object set; determining, in accordance with that a target information update message for the target object is detected, whether the target object is currently displayed on the object page; and displaying a target interaction control on the object page in accordance with a determination that the target object is currently not displayed on the object page, wherein the target interaction control is configured to trigger display of the target object on the object page.

In an optional embodiment, the target information update message for the target object includes: an update message for attribute information of the target object, or a message of controlling an object in the target status to switch from the target object to a first object.

In an optional embodiment, the target information update message indicates an update situation of target information, the target information includes at least one of current presentation status information, resource attribute information, resource object binding information, business information, or recommendation amount information; in accordance with that the target information includes the current presentation status information, the target information update message is a message for releasing the target status for the target object; in accordance with that the target information includes the resource attribute information, the target information update message is a message for reducing resource attribute information for the target object; in accordance with that the target information includes the resource object binding information, the target information update message is a message for binding a resource object for the target object; in accordance with that the target information includes the business information, the target information update message is a message for increasing business resource for the target object; and in accordance with that the target information includes the recommendation amount information, the target information update message is a message of controlling an object amount of the target object to switch from zero to a target amount.

In an optional embodiment, displaying the target interaction control on the object page in accordance with a determination that the target object is currently not displayed on the object page includes: determining, in accordance with a determination that the target object is currently not displayed on the object page, whether an object(s) currently displayed on the object page is in a predetermined sequential position interval in an object list, where the predetermined sequential position interval is determined based on a maximum displayable amount corresponding to the object page, and the maximum displayable amount is a maximum displayable amount of objects in the object list on the object page; and displaying, in accordance with a determination that there is an object in the currently displayed object(s) that is not in the predetermined sequential position interval, the target interaction control on the object page.

In an optional embodiment, objects in the recommended object set are displayed in a form of an object list, and the method further includes: controlling, in response to a trigger operation on the target interaction control, the object list on the object page to scroll in a predetermined direction corresponding to the target object until the target object is displayed.

In an optional embodiment, after responding to the trigger operation on the target interaction control, the method further includes: refraining from displaying the target interaction control.

In an optional embodiment, after displaying the target interaction control on the object page, the method further includes: refraining from displaying the target interaction control on the object page in response to an interaction operation of displaying the target object on the object page.

In an optional embodiment, the first page includes a live streaming room page, and the target status is a status of being explained.

In a second aspect, the present disclosure further provides an object processing apparatus, including: a first displaying module, configured to display an object page on a first page, where the object page is configured to present at least one object in a recommended object set, and the target object is an object in a target status in the recommended object set; a first determining module, configured to determine, upon detecting a target information update message for the target object, whether the target object is currently displayed on the object page; and a second displaying module, configured to determine that the target object is currently not displayed on the object page and display a target interaction control on the object page, where the target interaction control is configured to trigger display of the target object on the object page.

In a third aspect, the present disclosure provides a computer-readable storage medium having instructions stored thereon, where the instructions, when executed on a terminal device, cause the terminal device to implement the foregoing method.

In a fourth aspect, the present disclosure provides an electronic device, including: a memory, a processor, and a computer program stored in the memory and executable on the processor, where the processor, when executing the computer program, implements the foregoing method.

In a fifth aspect, the present disclosure provides a computer program product, where the computer program product includes a computer program/instruction, and when the computer program/instruction is executed by a processor, implements the foregoing method.

### BRIEF DESCRIPTION OF DRAWINGS

The drawings herein are incorporated into and constitute a part of this specification. The drawings illustrate embodiments consistent with the present disclosure and, together with the description, serve to explain the principles of the present disclosure.

In order to more clearly illustrate the technical solutions in embodiments of the present disclosure or in the prior art, the accompanying drawings to be used in the description of embodiments or the prior art will be briefly introduced below. It is obvious to those skilled in the art that other drawings may be obtained according to these drawings without creative effort.
FIG. 1 is a flowchart of an object processing method according to embodiments of the present disclosure;
FIG. 2 is a schematic diagram of an object page according to embodiments of the present disclosure;
FIG. 3 is a schematic diagram of another object page according to embodiments of the present disclosure;
FIG. 4 is a schematic diagram of another object page according to embodiments of the present disclosure;
FIG. 5 is a schematic structural diagram of an object processing apparatus according to embodiments of the present disclosure;
FIG. 6 is a schematic structural diagram of an electronic device according to embodiments of the present disclosure.

### DETAILED DESCRIPTION

In order to more clearly understand the above objects, features and advantages of the present disclosure, the solutions of the present disclosure will be further described below. It should be noted that, in the absence of conflict, the features in embodiments and embodiments of the present disclosure may be combined with each other.

Many specific details are set forth in the following description to facilitate a thorough understanding of the present disclosure, but the present disclosure may also be implemented in other ways other than those described herein. It is apparent that embodiments in the specification are only part of embodiments of the present disclosure, not all embodiments.

In order to meet diversified requirements of users for interactive functions related to objects presented on a page, embodiments of the present disclosure provide an object processing method. Specifically, an object page is displayed on a first page, where the object page is configured to present at least one object in a recommended object set, a target object is an object in a target status in the recommended object set. If a target information update message for the target object is detected, it is determined whether the target object is currently displayed on the object page, and if it is determined that the target object is currently not displayed on the object page, a target interaction control is displayed on the object page, where the target interaction control is configured to trigger display of the target object on the object page.

In embodiments of the disclosure, the display of the target interaction control is triggered through the target information update message of the target object, so that the user can conveniently trigger the display of the target object through the target interaction control, and check update information of the target object in time. Thereby, interaction complexity is simplified, and user experience is improved.

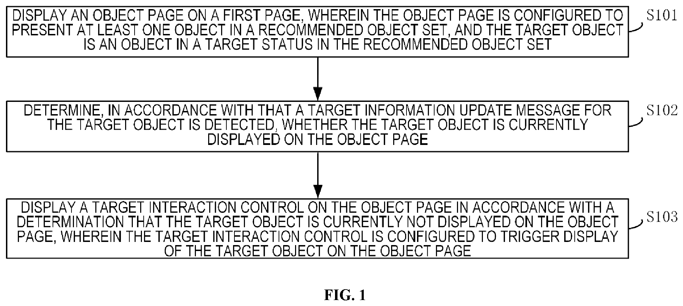

Specifically, embodiments of the present disclosure provide an object processing method. FIG. 1 is a flowchart of an object processing method according to embodiments of the present disclosure, specifically includes:
S101: an object page is displayed on a first page.

The object page is configured to display at least one object in a recommended object set, and a target object is an object in a target status among the recommended object set.

The object processing method provided in embodiments of the present disclosure may be applied to a client. Specifically, the client may be deployed on a terminal such as a smart phone, a tablet computer, a desktop computer, or the like.

In embodiments of the present disclosure, the first page may be any page, for example, may be a live streaming room page. In response to a trigger operation acting on the first page, the object page is displayed on the first page. For example, in response to a trigger operation acting on an object list control (also referred to as a shopping cart control) on the live streaming room page, the object page is displayed on the live streaming room page. At least one object in the recommended object set is presented on the object page.

In some embodiments, the recommended object set may have a correspondence with a user account corresponding to the first page. For example, the recommended object set may be a live streaming commodity set under a live streaming account corresponding to the live streaming room page, and at least one object in the recommended object set may be presented on the object page. That is, the at least one object is an object in a live streaming object list on the live streaming room page. Specifically, the target object may be a live streaming object in the live streaming object list that is in a status of being explained.

S102: if a target information update message for the target object is detected, it is determined whether the target object is currently displayed on the object page.

In some embodiments, the target information update message for the target object may be an update message for attribute information of the target object. The attribute information of the target object is, for example, resource attribute information of the target object, resource binding information of the target object, business information of the target object, and object amount information of the target object.

For the target information update message of the target object, it may also be a message of controlling an object in the target status to switch from the target object to a first object, that is, the target object in the recommended object set is switched to the first object. The first object refers to an object in a non-target status. That is, the target object is switched.

In embodiments of the present disclosure, the target information update message indicate that information related to the target object is updated. Specifically, the target information update message may be configured to update the target information of the target object. The target information may specifically include at least one of: current presentation status information, resource attribute information, resource object binding information, business information, or recommendation amount information of the target object.

In some embodiments, the current presentation status information of the target object may refer to a change of an object in the target status. The resource attribute information of the target object may refer to information such as an object value of the target object, and may specifically be price information of the target object. The resource object binding information of the target object may refer to resource object information such as a gift of the target object. The business information of the target object may refer to activity information that the target object participates in, for example, a time-limited flash sale, a price reduction activity, and the like. The recommendation amount information of the target object may refer to inventory amount, replenishment amount of the target object, and the like.

In an optional embodiment, if the target information includes the current presentation status information, the target information update message of the target object may be specifically a message for releasing the target status for the target object, to indicate that the object in the target status in the recommended object set is switched from the target object to the first object.

In another optional embodiment, if the target information includes resource object binding information, the target information update message of the target object may be specifically a message for binding the resource object for the target object, for example, a message for adding the gift to the target object .

In another optional embodiment, if the target information includes resource attribute information, the target information update message of the target object may be specifically an information for reducing resource attribute for the target object, for example, a message for reducing a price of the target object .

In another optional embodiment, if the target information includes the business information, the target information update message of the target object may be an information for increasing the business resource for the target object, for example, a message that the target object participates in a flash sale.

In another optional embodiment, if the target information includes the recommendation amount information, the target information update message of the target object may be a message of controlling an object amount of the target object to switch from zero to a target amount, for example, a message that the target object is switched from a sold-out status to a newly-added inventory.

S103: If it is determined that the target object is currently not displayed on the object page, a target interaction control is displayed on the object page.

The target interaction control is configured to trigger display of the target object on the object page.

In embodiments of the present disclosure, the target object is currently not displayed on the object page. Through a scroll operation acting on an object list on the object page, the user may cause the target object to move out of a display area on the object page. The object(s) in the recommended object set is presented on the object page in a form of an object list.

In embodiments of the disclosure, the function of displaying the target object on the object page can be implemented by triggering the target interaction control. For the interaction operation of triggering the target interaction control to display the target object on the object page, it may include an interaction operation such as clicking or long pressing the target interaction control, which is not limited in embodiments of the present disclosure.

In an optional embodiment, when a trigger operation of the target interaction control is received, the object list on the object page is controlled to scroll in a predetermined direction corresponding to the target object until the target object is displayed.

In actual application, after the target object is displayed on the object page by triggering the target interaction control, in order to avoid affecting the browsing experience, in embodiments of the present disclosure, when the target interaction control is triggered, the target interaction control may be refrained from displaying on the object page.

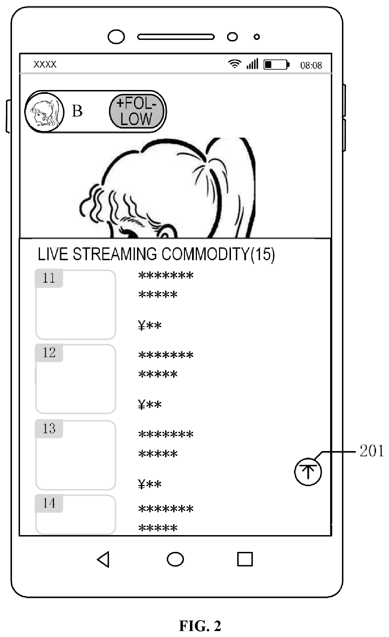

FIG. 2 is a schematic diagram of an object page according to embodiments of the present disclosure. A target interaction control 201 is displayed on the object page. When the target interaction control 201 is triggered, the object list on the object page is controlled to scroll in the predetermined direction corresponding to the target object until the target object is displayed, and at this time, the target interaction control is refrained from being displayed on the object page.

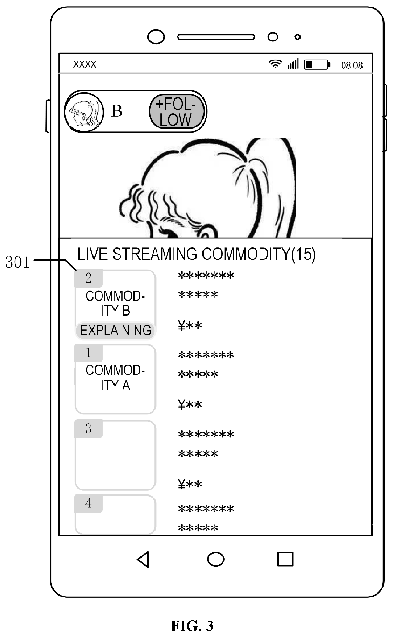

FIG. 3 is a schematic diagram of another object page according to embodiments of the present disclosure. A target object 301 is displayed on the object page.

In actual application, when the target information update message for the target object is detected, if it is determined that the target object is currently displayed on the object page, it is unnecessary to display the target interaction control on the object page. In fact, the user can directly check the update situation of the update information of the target object.

Based on the foregoing embodiments, on the premise that the target information update message for the target object is detected, and it is determined that the target object is currently not displayed on the object page, embodiments of the present disclosure may further set a predetermined sequential position interval. In addition, on the premise that the target object is currently not displayed, the relationship between the display position of the object currently displayed in the object list on the object page and the predetermined sequential position interval may be determined at the same time.

In some embodiments, the objects in the recommended object set presented on the object page are displayed on the object page in a form of an object list. The predetermined sequential position interval is determined based on a maximum displayable amount corresponding to the object page, and the maximum displayable amount is a maximum displayable amount of objects in the object list on the object page.

Specifically, upon detecting the live streaming information update message for the target object, it is first determined whether the target object is currently displayed on the object page. If it is determined that the target object is currently not displayed on the object page, it is still necessary to determine whether the object(s) currently displayed on the object page is in a predetermined sequential position interval in the object list. The predetermined sequential position interval may be, for example, a position interval from 1 to 10.

If it is determined that the currently displayed object(s) is an object in the predetermined sequential position interval, it is unnecessary to display the target interaction control on the object page. If it is determined that there is an object in the currently displayed object(s) that is not in the predetermined sequential position interval, the target interaction control is displayed on the object page.

In other words, upon detecting the live streaming information update message for the target object, the target interaction control is displayed on the object page only when it is determined that the target object is currently not displayed on the object page and the object displayed on the current object page is not in the predetermined sequential position interval.

In some embodiments, the predetermined sequential position interval refers to a predetermined object presentation position interval in an object list.

For example, it is assumed that the predetermined sequential position interval are positions 1-10, on a display screen of a terminal device, in the process of displaying the object page, one screen may display at most 5 display items on the object page, and when more than two screens are displayed, that is, after the 10th position appears, for example, when the 11th position appears, the target interaction control is displayed on the object page, as shown in the object page in FIG. 2. When the two screens are not exceeded, the target interaction control is not displayed on the object page.

In addition, the predetermined sequential position interval may also be set based on specific requirements.

In an object processing method provided by embodiments of the present disclosure, an object page is displayed on a first page, where the object page is configured to present at least one object in a recommended object set, and a target object is an object in a target status in the recommended object set. If the target information update message for the target object is detected, it is determined whether the target object is currently displayed on the object page. If it is determined that the target object is currently not displayed on the object page, the target interaction control is displayed on the object page. The target interaction control is configured to trigger display of the target object on the object page.

In embodiments of the disclosure, the display of the target interaction control is triggered through the target information update message of the target object, so that the user can conveniently trigger the display of the target object through the target interaction control, and check update information of the target object timely. Thereby, interaction complexity is simplified, and user experience is improved.

In actual applications, in addition to triggering the target interaction control to display the target object on the object page, other interaction operations may also be triggered to display the target object on the object page.

Specifically, on the basis of displaying the target interaction control on the object page, when the interaction operation for displaying the target object on the object page is received, at this time, the target interaction control is refrained from being displayed on the object page. The interaction operation for displaying the target object on the object page is, for example, manually scrolling the object list.

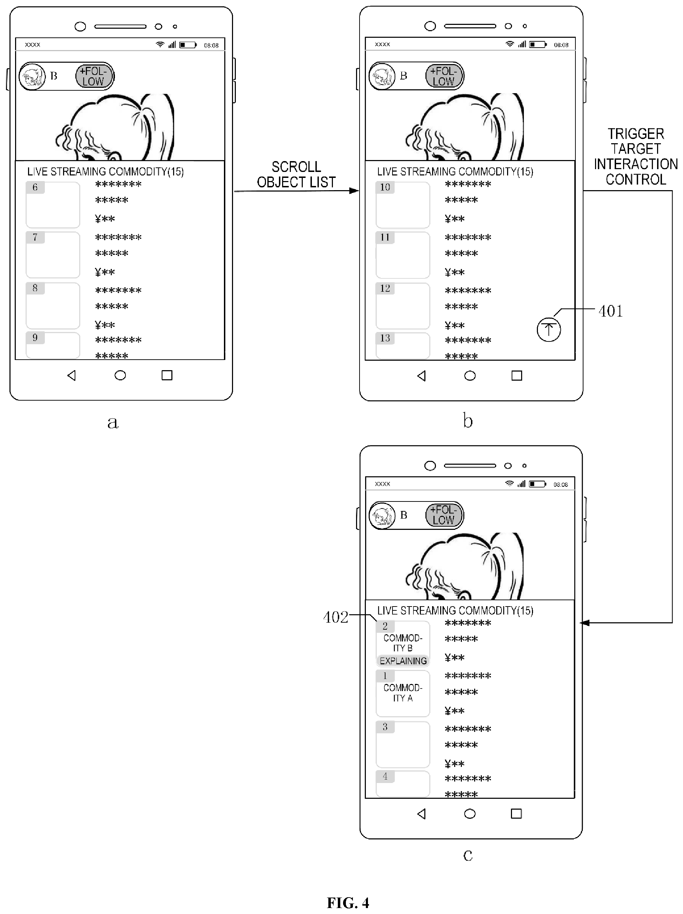

For ease of understanding the foregoing embodiments, embodiments of the present disclosure will take the first page being a live streaming room page as an example to introduce the object processing method provided in the present disclosure as a whole. FIG. 4 is a schematic diagram of an object page according to embodiments of the present disclosure. It is assumed that a predetermined sequential position interval is 1-10.

Firstly, when an object page displaying trigger acting on the live streaming room page is received, the object page is presented on the live streaming room page, and at least one object in the recommended object set is presented on the object page. The at least one object is presented on the object page in a form of an object list. The at least one object in the recommended object set may be a live streaming object, and an object in a target status in the recommended object set may be a live streaming object that is being explained.

If the target information update message for the target object is detected, it is determined whether the target object is currently displayed on the object page. The target information update message of the target object may be a message for releasing the live streaming object from the status of being explained, that is, a message that the live streaming object being explained is switched from the live streaming object to a first object. Alternatively, the target information update message of the target object may be a message for binding the gift to the target object; or a message for reducing the price of the target object; or a message that the target object is allowed to be purchased in a limited time; or a message for increasing inventory when the target object is in a sold-out status.

It is assumed that, if the message for releasing the target object from the status of being explained is detected, that is, the message that the live streaming object being explained is switched, it is firstly determined whether the target object is currently displayed on the object page.

If it is determined that the target object is currently displayed on the object page, it is unnecessary to display the target interaction control on the object page; for example, the target object 301 in the object page shown in FIG. 3.

If it is determined that the target object is currently not displayed on the object page, then continue to determine whether there is a live streaming object in the predetermined sequential position interval among the live streaming objects currently displayed on the target page. If it is determined that the currently displayed live streaming objects are all live streaming objects in the predetermined sequential position interval, it is unnecessary to display the target interaction control on the object page; as shown in the object page a in FIG. 4. If it is determined that there is a live streaming object, that is not in the predetermined sequential position interval, in the live streaming objects currently displayed on the object page, the target interaction control is displayed on the object page, e.g., the target interaction control 401 in the object page b shown in FIG. 4.

When a trigger operation for the target interaction control is received, the object list on the object page is controlled to scroll in a predetermined direction corresponding to the target object until the target object is displayed, and the target interaction control is not displayed. The target object 402 is shown in the object page c in FIG. 4.

According to embodiments of the disclosure, the display of the target interaction control is triggered through the target information update message of the target object, so that the user can conveniently trigger the display of the target object through the target interaction control, and check update information of the target object timely. Thereby, interaction complexity is simplified, and user experience is improved.

Based on the foregoing method embodiments, the present disclosure further provides an object processing apparatus, referring to 5, which is a schematic structural diagram of a live streaming object apparatus according to embodiments of the present disclosure. The apparatus includes: a first displaying module 501, configured to display an object page on a first page, where the object page is configured to present at least one object in a recommended object set, and the target object is an object in a target status in the recommended object set; a first determining module 502, configured to determine, upon detecting a target information update message for the target object, whether the target object is currently displayed on the object page; and a second displaying module 503, configured to determine that the target object is currently not displayed on the object page and display a target interaction control on the object page, where the target interaction control is configured to trigger display of the target object on the object page.

In an optional embodiment, the target information update message for the target object includes: an update message for attribute information of the target object, or a message of controlling an object in the target status to switch from the target object to a first object.

In an optional embodiment, the target information update message indicates an update situation of target information, the target information including at least one of current presentation status information, resource attribute information, resource object binding information, business information, or recommendation amount information; if the target information includes the current presentation status information, the target information update message is a message for releasing the target status for the target object; if the target information includes the resource attribute information, the target information update message is a message for reducing resource attribute information for the target object; if the target information includes the resource object binding information, the target information update message is a message for binding a resource object for the target object; if the target information includes the business information, the target information update message is a message for increasing business resource for the target object; and if the target information includes the recommendation amount information, the target information update message is a message of controlling an object amount of the target object to switch from zero to a target amount.

In an optional embodiment, the second displaying module includes: a first determining sub-module, configured to determine, if it is determined that the target object is currently not displayed on the object page, whether an object(s) currently displayed on the object page is in a predetermined sequential position interval in an object list, where the predetermined sequential position interval is determined based on a maximum displayable amount corresponding to the object page, and the maximum displayable amount is a maximum displayable amount of objects in the object list on the object page; and a first displaying sub-module, configured to display a target interaction control on the object page, if it is determined that there is an object in the currently displayed object(s) that is not in the predetermined sequential position interval.

In an optional embodiment, the object in the recommended object set is presented in a form of an object list, and the apparatus further includes: a first controlling module, configured to control, in response to a trigger operation on the target interaction control, the object list on the object page to scroll in a predetermined direction corresponding to the target object until the target object is displayed.

In an optional embodiment, the apparatus further includes: a third displaying module, configured to refrain from displaying of the target interaction control.

In an optional embodiment, the apparatus further includes: a first refraining module, configured to refrain from displaying of the target interaction control on the object page in response to an interaction operation of displaying the target object on the object page.

In an optional embodiment, the first page includes a live streaming room page, and the target status is a status of being explained .

In an object processing apparatus provided by embodiments of the present disclosure, an object page is displayed on a first page, where the object page is configured to present at least one object in a recommended object set, and target object is an object in a target status in the recommended object set. If the target information update message for the target object is detected, it is determined whether the target object is currently displayed on the object page, and if it is determined that the target object is currently not displayed on the object page, the target interaction control is displayed on the object page, where the target interaction control is configured to trigger display of the target object on the object page.

In embodiments of the disclosure, the display of the target interaction control is triggered through the target information update message of the target object, so that the user can conveniently trigger the display of the target object through the target interaction control, and check update information of the target object in time. Thereby, interaction complexity is simplified, and user experience is improved.

In addition to the foregoing method and apparatus, an embodiment of the present disclosure further provides a computer-readable storage medium having instructions stored thereon, where the instructions, when executed on a terminal device, cause the terminal device to implement the object processing method of embodiments of the present disclosure.

An embodiment of the present disclosure further provides a computer program product, including a computer program/instruction, where the computer program/instruction, when executed by a processor, implements the object processing method according to embodiments of the present disclosure.

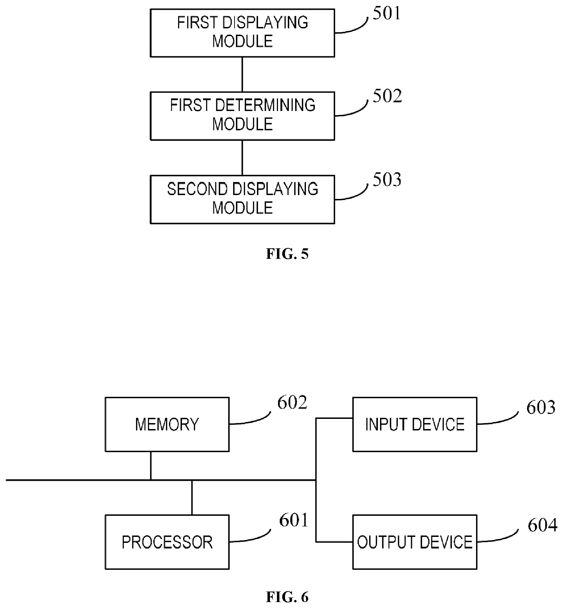

In addition, an embodiment of the present disclosure further provides an electronic device, as shown in FIG. 6, which may include a processor 601, a memory 602, an input device 603, and an output device 604. The number of the processors 601 in the electronic device may be one or more, and one processor is used as an example in FIG. 6. In some embodiments of the present disclosure, the processor 601, the memory 602, the input device 603, and the output device 604 may be connected by a bus or other manners, where the bus connection is used as an example in FIG. 6.

The memory 602 may be configured to store software programs and modules, and the processor 601 executes various functional applications and data processing of the electronic device by running software programs and modules stored in the memory 602. The memory 602 may mainly include a storage program area and a storage data area, where the storage program area may store an operating system, an application program required by at least one function, and the like. In addition, the memory 602 may include a high-speed random access memory, and may also include a non-volatile memory, for example, at least one disk storage device, a flash memory device, or another volatile solid-state storage device. The input device 603 may be configured to receive input digit or character information, and generate signal input related to user settings and function control of the electronic device.

Specifically, in this embodiment, the processor 601 loads the executable file corresponding to the process of one or more application programs into the memory 602 according to the following instruction, and runs the application program stored in the memory 602 by the processor 601, thereby implementing various functions of the foregoing electronic device.

It should be noted that, in this specification, relational terms such as "first" and "second" are merely used to distinguish one entity or operation from another entity or operation, and do not necessarily require or imply that any such actual relationship or sequence exists between these entities or operations. Moreover, the terms "comprise", "include" or any other variation thereof are intended to cover a non-exclusive inclusion, such that a process, method, article, or apparatus including a series of elements includes not only those elements, but also other elements not expressly listed, or elements inherent to such a process, method, article, or apparatus. Without further restriction, the elements defined by the statement "include a ... " do not preclude the presence of additional identical element(s) in the process, method, article, or device that includes the element.

The above descriptions are only specific embodiments of the present disclosure, so that those skilled in the art can understand or implement the present disclosure. Various modifications to these embodiments will be apparent to those skilled in the art, the general principles defined herein may be implemented in other embodiments without departing from the spirit or scope of the present disclosure. Accordingly, the present disclosure will not be limited to these embodiments described herein, but accord with the widest scope consistent with the principles and novel features disclosed herein.

## Claims

1. An object processing method comprising:
displaying an object page on a first page, wherein the object page is configured to present at least one object in a recommended object set, and the target object is an object in a target status in the recommended object set;
determining, in accordance with that a target information update message for the target object is detected, whether the target object is currently displayed on the object page; and
displaying a target interaction control on the object page in accordance with a determination that the target object is currently not displayed on the object page, wherein the target interaction control is configured to trigger display of the target object on the object page.

2. The method of claim 1, wherein the target information update message for the target object comprises:
an update message for attribute information of the target object, or a message of controlling an object in the target status to switch from the target object to a first object.

3. The method of claim 1, wherein the target information update message indicates an update situation of target information, the target information comprising at least one of current presentation status information, resource attribute information, resource object binding information, business information, or recommendation amount information;
in accordance with that the target information comprises the current presentation status information, the target information update message is a message for releasing the target status for the target object;
in accordance with that the target information comprises the resource attribute information, the target information update message is a message for reducing resource attribute information for the target object;
in accordance with that the target information comprises the resource object binding information, the target information update message is a message for binding a resource object for the target object;
in accordance with that the target information comprises the business information, the target information update message is a message for increasing business resource for the target object; and
in accordance with that the target information comprises the recommendation amount information, the target information update message is a message of controlling an object amount of the target object to switch from zero to a target amount.

4. The method of claim 1, wherein displaying the target interaction control on the object page in accordance with a determination that the target object is currently not displayed on the object page comprises:
determining, in accordance with a determination that the target object is currently not displayed on the object page, whether an object(s) currently displayed on the object page is in a predetermined sequential position interval in an object list, wherein the predetermined sequential position interval is determined based on a maximum displayable amount corresponding to the object page, and the maximum displayable amount is a maximum displayable amount of objects in the object list on the object page; and
displaying, in accordance with a determination that there is an object in the currently displayed object(s) that is not in the predetermined sequential position interval, the target interaction control on the object page.

5. The method of claim 1, wherein objects in the recommended object set are displayed in a form of an object list, and the method further comprises:
controlling, in response to a trigger operation on the target interaction control, the object list on the object page to scroll in a predetermined direction corresponding to the target object until the target object is displayed.

6. The method of claim 5, wherein after responding to the trigger operation on the target interaction control, the method further comprises:
refraining from displaying of the target interaction control.

7. The method of claim 1, wherein after displaying the target interaction control on the object page, the method further comprises:
refraining from displaying the target interaction control on the object page in response to an interaction operation of displaying the target object on the object page.

8. The method of claim 1, wherein the first page comprises a live streaming room page, and the target status is a status of being explained.

9. An object processing apparatus comprising:
a first displaying module, configured to display an object page on a first page, wherein the object page is configured to present at least one object in a recommended object set, and the target object is an object in a target status in the recommended object set;
a first determining module, configured to determine, upon detecting a target information update message for the target object, whether the target object is currently displayed on the object page; and
a second displaying module, configured to determine that the target object is currently not displayed on the object page and display a target interaction control on the object page, wherein the target interaction control is configured to trigger display of the target object on the object page.

10. A computer-readable storage medium having instructions stored thereon, where the instructions, when executed on a terminal device, cause the terminal device to implement the method of any of claims 1 to 8.

11. An electronic device, comprising: a memory, a processor, and a computer program stored in the memory and executable on the processor, wherein the processor, when executing the computer program, implements the method of any of claims 1 to 8.

12. A computer program product, comprising computer executable instructions, wherein the computer executable instructions, when executed by a processor, implement the method of any of claims 1 to 8.
